# EUROPEAN PATENT SPECIFICATION

(11) **EP 1 464 815 B1**
(45) Date of publication and mention of the grant of the patent: **04.01.2006**
(21) Application number: 04007119.3
(22) Date of filing: 24.03.2004
(51) Int. Cl.: F02D 41/02, F02D 41/22, F02D 41/40, F01N 9/00

(54) **Control apparatus and method for internal combustion engine**
Steuervorrichtung und Steuerverfahren für Verbrennungsmotoren
Dispositif de régulation et procédé de régulation d'un moteur à combustion

(30) Priority: 31.03.2003 JP 2003094500
(43) Date of publication of application: 06.10.2004
(73) Proprietor: Mazda Motor Corporation, Aki-gun, Hiroshima 730-8670 (JP)
(72) Inventor: Nishimura, Hiroyuki, Aki-gun Hiroshima 730-8670 (JP); Yashiki, Eriko, Aki-gun Hiroshima 730-8670 (JP)
(74) Representative: Müller-Boré & Partner Patentanwälte

(56) References cited:
- WO-A-02/31324
- US-A- 5 384 707

## Description

The present invention relates to a control apparatus for an engine, engine, diesel engine, control method of an engine, and computer program product, which are adapted to regenerate a particulate filter that traps exhausted particulate included in exhaust gas from the engine.

In general, exhaust gas from a diesel engine includes fine particle called particulate. For trapping and removing the particulate, a particulate filter may be provided in an exhaust passage.

As an operating period of the engine is prolonged, the amount of the exhausted particulate trapped in the filter increases, causing the filter to be gradually clogged with the particulate. To cope with this, generally, when a predeterminable condition is fulfilled, the removal of the exhausted particulate from the filter, or the filter regeneration is performed.

The filter regeneration raises the filter temperature so as to bum out the trapped exhausted particulate. The bum-out operation is promoted as the filter temperature rises. Thus, in order to efficiently raise the filter temperature, the opening degree of an intake throttle valve, provided in an intake passage of the engine, is reduced from that in a non-regenerating state to decrease the intake-air amount and thus the exhaust-gas amount. With the exhaust gas temperature having been effectively increased as a result of the above, a primary fuel injection is performed into a combustion chamber of a cylinder near the top dead center of the compression stroke, followed by a post injection performed during the expansion stroke. This filter regeneration operation causes the filter temperature to rise, resulting in successive temperature rise in the filter as the filter regeneration operation proceeds.

in a vehicle mounted with a diesel engine, the opening degree of the intake throttle valve is conventionally feedback-controlled in accordance with engine load indicated by the acceleration pedal position, engine rotational speed, and/or the like, during a normal operating condition of the engine. Accordingly, in case that a malfunction occurs in a opening sensor for detecting the opening degree of the intake throttle valve, the sensor inaccurately detects the opening degree of the valve, which degrades the accuracy of the feedback control of the intake throttle valve performed in accordance with the detected value. In this regard, as disclosed in Japanese Patent Publication S61-15262 and Japanese Unexamined Patent Publication H11-241638, it has been proposed that the detected value of the valve opening be substituted with another parameter, such as the value of intake pressure of the engine and/or driving current in a driving motor of the throttle valve.

However, the use of another parameter in substitution for the detected value of the opening sensor to be actually used inevitably results in the inferiority in accuracy of the control and thus disadvantageously requires a complicated control for compensating for the inferiority. Thus, especially in the vehicle with the diesel engine, it has been proposed that in case a malfunction occurs in the opening sensor of the intake throttle valve, a measure should be taken to handle or cope with the malfunction such that the intake throttle valve is fully opened for ensuring the favorable running performance.

However, when the measure is taken during the regeneration of the particulate filter, the following problem is encountered. That is, as described above, the filter temperature has already been increased during the regeneration of the particulate filter. The full opening of the intake throttle valve in such a condition abruptly increases oxygen supply and thus the exhausted particulate quickly bums. As a result, the filter temperature unduly rises to possibly cause the melt, defect, and/or hypofunction of the particulate filter.

WO 02/31324 discloses an exhaust emission control device having a particulate filter comprising a throttle valve control means for increasing the opening of a throttle valve to set an opening in response to a fuel cut command and a defective generated output detection means for stopping the increase of the opening of the throttle valve by the throttle valve control means, when a defective generated output is detected by the defective generated output detection means^.

US 5 384 707 discloses a diagnostic method for an airflow of an internal combustion engine using three independent airflow determinations. The three airflow determinations are compared and if one airflow determination differs significantly from the other determinations, this one airflow determination is judged to be wrong.

In view of the above-described problem, an object of the present invention is to improve the operation of the regeneration of the particulate filter, particularly to prevent the melt or the like of a particulate filter due to the unduly temperature rise of the filter, when the full opening of an intake throttle valve or an increase in the amount of intake air or an increase in the amount of intake air is demanded during the regeneration of the particulate filter.

The object is solved according to the invention by a control apparatus for an engine according to claim 1, by an engine according to claim 6, by a diesel engine according to claim 7, by a control method of an engine according to claim 8, and by a computer program product according to claim 9. Preferred embodiments of the present invention are subject of the dependent claims.

Accordingly, the present invention prevents the melt or the like of a particulate filter due to the unduly temperature rise of the filter, when the full opening of an intake throttle valve or an increase in the amount of intake air is demanded during the regeneration of the particulate filter.

In accordance with the present invention, there is provided a control apparatus for an engine being equipped with trapping means for trapping exhausted particulate in an exhaust passage of the engine. The control apparatus comprises: first parameter value detection means; second parameter value detection means; regeneration initiation judgement or determination means; regeneration means; malfunction detection means; malfunction handling means; and malfunction handling inhibition means. The first parameter value detection means detects a parameter value associated with an amount of intake air. The second parameter value detection means detects at least one parameter value associated with the amount of exhausted particulate trapped in the trapping means. The regeneration initiation judgement or determination means makes an initiation judgement or determination that a burn-out operation of the exhausted particulate trapped in the trapping means should be initiated in accordance with a detection of the second parameter value detection means. The regeneration means, when the initiation judgement or determination is made by the regeneration initiation judgement or determination means, regenerates the trapping means by reducing the amount of intake air from that attained in accordance with the engine operational condition during non-regeneration state. The malfunction detection means detects a malfunction of the first parameter value detection means. The malfunction handling means handles the malfunction by increasing the amount of intake air or allowing the substantially maximum amount of intake air in case the malfunction detection means detects the malfunction of the first parameter value detection means. The malfunction handling inhibition means inhibits an operation of the malfunction handling means during a regeneration operation of the regeneration means even in case the malfunction detection means detects a malfunction of the first parameter value detection means.

Accordingly, during the regeneration operation of the trapping means, an increase in the amount of intake-air is inhibited even in case of the malfunction being detected in the first parameter value detection means. This avoids the unduly rise in the temperature of the trapping means due to the abrupt increase in the oxygen supply to the trapping means and the accompanying problem such as melt, defect, and/or hypofunction of the trapping means.

Preferably, the control apparatus may further comprise third parameter value detection means for detecting a parameter value associated with the progress of the regeneration by the regeneration means. The malfunction handling inhibition means inhibits the operation of the malfunction handling means only when the progress in the regeneration detected by the third parameter value detection means is greater than a specified (predetermined or predeterminable) degree.

Accordingly, only when the progress in the regeneration of the trapping means is greater than the specified (predetermined or predeterminable) degree and the temperature of the trapping means is relatively high, the intake throttle valve is inhibited from being fully opened (in other words, in the early stage of the regeneration during which the exhausted particulate trapped in the trapping means has not yet actively burnt out, the intake throttle valve is immediately fully opened). Thus, the drawback accompanying the inhibition, such as inability to ensure the favorable running performance, is eliminated.

More preferably, the regeneration means, when the initiation judgement is made by the regeneration initiation judgement means, may further control a fuel injector of the engine to perform a post injection during the expansion stroke after a primary injection near the top dead center of the compression stroke. When the malfunction handling inhibition means inhibits the operation of the malfunction handling means, the regeneration means may reduce the amount of the post injection.

Accordingly, an increase in the amount of intake-air is inhibited and the amount of the post injection, which is to be performed to regenerate the trapping means, is concurrently reduced, so that the regeneration of the trapping means is suppressed, thereby positively dropping the temperature of the trapping means.

Further preferably, the control apparatus may further comprise regeneration suppression judgement or determination means for judging that the reduction in the amount of the post injection has suppressed the progress in the regeneration of the trapping means based on the detection by the third parameter value detection means. The malfunction handling inhibition means discontinues the inhibition of the operation of the malfunction handling means when the regeneration suppression judgement or determination means judges that the progress in the regeneration is suppressed.

Accordingly, when the reduction in the amount of the post injection has suppressed the progress in the regeneration of the trapping means, the amount of intake air may be increased. Thus, the unduly temperature rise of the trapping means and accompanying melt of the trapping means are avoided, with the advantage from an increase in the amount of intake air, such as above-described favorable running performance, being ensured.

Still further preferably, the third parameter value detection means may detect any one of a parameter value associated with the temperature of the trapping means and the lapsed time since the regeneration means initiated its operation.

Accordingly, the progress in the regeneration of the trapping means is accurately grasped, thereby sufficiently attaining the above-described advantages.

In accordance with the present invention, there is further provided an engine equipped with the control apparatus according to the present invention or preferred embodiments thereof.

The control apparatus according to the present invention or the preferred embodiments thereof may be advantageously combined with a diesel engine.

In accordance with the present invention, there is still further provided a control method of an engine being equipped with trapping means for trapping exhausted particulate in an exhaust passage of the engine. The method comprises the following steps of: detecting a first parameter value associated with the amount of intake-air; detecting at least one second parameter value associated with the amount of exhausted particulate trapped in the trapping means; making an initiation judgement or determination that a bum-out operation of the exhausted particulate trapped in the trapping means should be initiated based on a detection of the second parameter value; regenerating the trapping means upon the initiation judgement or determination by reducing the amount of intake-air to a smaller degree than that attained in accordance with the engine operational condition during non-regeneration state; detecting a malfunction in the step of detecting the first parameter value; handling a malfunction by increasing the amount of intake air or allowing a substantially maximum amount of intake-air in case the malfunction is detected in the step of detecting the first parameter value; and inhibiting the handling of the malfunction during the regeneration of the trapping means even in case the malfunction is detected in the step of detecting the first parameter value.

In accordance with the present invention, there is still further provided a computer program product which, when loaded onto a computer for use in a control apparatus for an engine being equipped with trapping means for trapping exhausted particulate in an exhaust passage of the engine carries out the control method of an engine according to the present invention or preferred embodiments thereof.

Other features, aspects, and advantages of the present invention will become apparent from the following description of the invention which refer to the accompanying drawings.
FIG. 1 is a system diagram of an engine according to an embodiment of the present invention;
FIG. 2 is a flow chart showing an example of a control of the opening of a throttle valve;
FIG. 3 is a time chart illustrating an example of the action of the control of the opening of the throttle valve (without the occurrence of sensor malfunction);
FIG. 4 is a time chart illustrating an example of the action of the control of the opening of the throttle valve (in case with the occurrence of sensor malfunction and the temperature of the particulate filter at the timing of the occurrence of the malfunction being a specified (predetermined or predeterminable) value or smaller);
FIG. 5 is a time chart illustrating an example of the action of the control of the opening of the throttle valve (in case with the occurrence of sensor malfunction and the temperature of the particulate filter at the timing of the occurrence of the malfunction being a specified (predetermined or predeterminable) value or larger); and
FIG. 6 is a flow chart showing another example of a control of the opening of a throttle valve.

A preferred embodiment of the present invention will now be described. It should be understood that even though embodiments are separately described, single features thereof may be combined to additional embodiments.

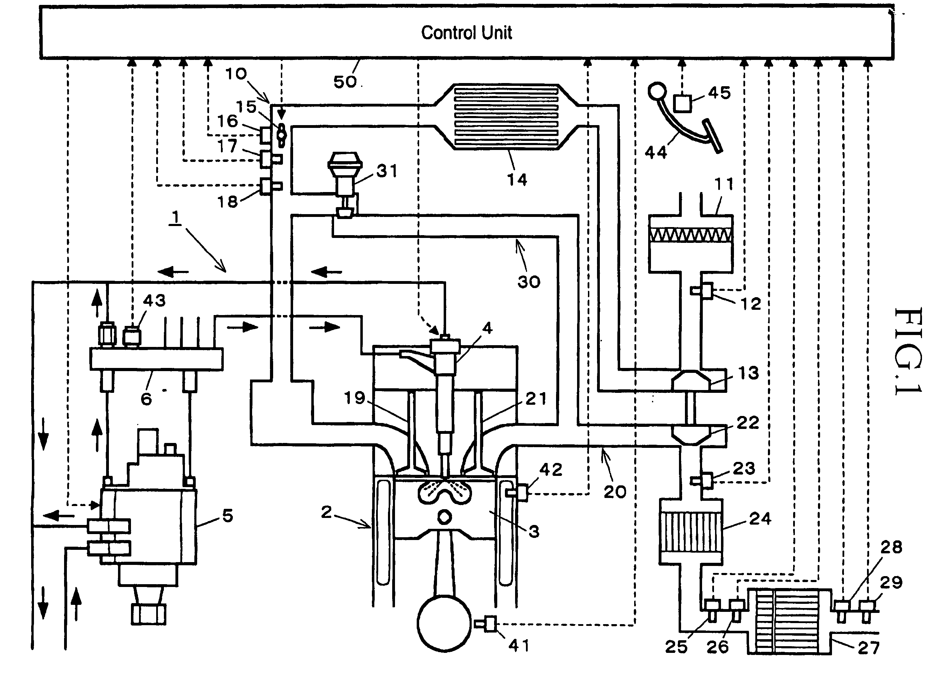

The present invention preferably is applied to a diesel engine 1 shown in FIG. 1. The engine 1 is a four-cylinder engine for example, having four pistons 3 (one of which is shown) provided therewith which vertically reciprocate in a cylinder bore of an engine main body 2. A cylinder head of the engine main body 2 is provided with an injector 4 correspondingly to each cylinder. The injector 4 directly injects fuel into a combustion chamber of the cylinder.

A high-pressure fuel pump 5 and common rail 6 are arranged in a fuel supply passage between a fuel tank, not shown, and the injector 4. The pump 5 press-feeds fuel from the fuel tank to the common rail 6, and the common rail 6 accumulates the press-fed fuel. When the injector 4 opens its valve, a fuel having been accumulated in the common rail 6 is injected at high pressure through one or more injection bores of the injector 4. The amount of the fuel to be injected is controllable by the adjustment of the valve-opening duration of the injector 4 and the fuel pressure in the common rail 6. The timing of the fuel injection is controllable preferably by the adjustment of the valve-opening timing of the injector 4. In the drawing, the arrows drawn along the fuel supply passage indicate the direction of fuel flow.

In an intake passage 10, from the upstream side, there are disposed at least part of the following elements: an air filter 11, an air-sensor such as a air-flow meter 12, a compressor 13 preferably of a turbocharger, an intercooler 14, an intake throttle valve 15 for adjusting the intake amount, an intake throttle valve opening sensor 16 (as preferred first parameter value detection means) for detecting the opening degree of the throttle valve 15, an intake-air temperature sensor 17, intake-air pressure sensor 18, and/or an intake valve 19, in this order.

In an exhaust passage 20, from the upstream side, there are disposed at least part of the following elements: an exhaust valve 21, a turbine 22 of the turbocharger, a first exhaust-gas temperature sensor 23, an oxidation catalyst converter 24, a second exhaust-gas temperature sensor 25 (as a preferred third parameter value detection means), an upstream pressure sensor 26 (as a preferred second parameter value detection means), a particulate filter 27 for trapping exhausted particulate in exhaust gas, a downstream pressure sensor 28 (as a preferred second parameter value detection means), and a third exhaust-gas temperature sensor 29, in this order. Between a relatively upstream portion of the exhaust passage 20 and a (preferably relatively downstream) portion of the intake passage 10, an exhaust gas recirculation (EGR) passage 30 is disposed. In the EGR passage 30, an EGR valve 31 is provided for adjusting or controlling the recirculation amount of the exhaust gas. The particulate filter 27 preferably is coated with oxidation catalyst agents including noble metal such as platinum

An engine rotational speed sensor 41 is attached to a crankcase (not shown) of the engine main body 2, and a coolant temperature sensor 42 is attached or connected preferably to a cylinder block (not shown). The common rail 6 is provided with a common rail pressure sensor 43 for detecting the accumulating pressure of fuel. In a passenger compartment (not shown), an accelerator pedal position sensor 45 is preferably provided for detecting the operational amount of an accelerator pedal 44.

A control unit 50 of the engine 1 outputs control signals to the injector 4 and the high-pressure fuel pump 5 in accordance with the intake-air amount, the intake-air temperature, the intake-air pressure, the temperature of the exhaust-gas flowing into the oxidation catalyst converter 24, the temperature of the exhaust-gas flowing out of the particulate filter 27, the pressures upstream and downstream of the particulate filter 27, the engine rotational speed, the coolant temperature, the fuel pressure in the common rail 6, and/or the engine load, which are detected by the above-described sensors.

The control unit 50 calculates a target fuel injection amount by compensating for a basic fuel injection amount by use of the coolant temperature and the intake-air temperature. The basic fuel injection amount is determined from the engine rotational speed detected by the engine rotational speed sensor 41 and the engine load detected preferably by the accelerator pedal position sensor 45, with the influence of EGR being considered.

The control unit 50 controls not only the EGR valve 31 but also the opening degree of the intake throttle valve 15 for the adjustment of the EGR amount. The opening degree is increased for the larger engine load (opening degree of the accelerator pedal) and the larger engine rotational speed.

The control unit 50 estimates or determines the amount of exhausted particulate trapped in the particulate filter 27 based on the pressure difference between the pressure upstream of the particulate filter 27 and the pressure downstream of the particulate filter 27, and determines the initiation timing of the bum-out operation of the exhausted particulate trapped in the particulate filter 27, or when to initiate the regeneration of the particulate filter 27.

When the estimated or determined trapped amount reaches a specified (predeterminer or predeterminable) amount or more, the control unit 50 initiates the regeneration of the particulate filter 27. That is, the control unit 50 changes the opening degree of the intake throttle valve 15 to a smaller degree than that in non-regeneration state (changes the degree to closing side), and initiates additional fuel injection (post injection) during the expansion stroke after a primary fuel injection performed near the top dead center (TDC) of the compression stroke of the piston 3. The post injection aims at oxidizing unburned component, caused by the post injection, in the oxidation catalyst converter 24 and the particulate filter 27 loaded with oxidation catalyst agents to raise the temperature thereof for quickly regenerating the particulate filter 27. The reduction in the opening degree of the intake throttle valve 15 to smaller than that in the non-regenerating state aims at decreasing the intake-air amount and thus the exhaust-gas amount for efficiently raising the temperature thereof and/or of the particulate filter 27.

The control unit 50 checks for the presence of a malfunction of the throttle valve opening sensor 16. Upon the detection of a malfunction, the control unit 50 controls the intake throttle valve 15 to substantially fully open, unless a specified (predetermined or predeterminable) condition has been fulfilled. The fully opening of the intake throttle valve 15 aims at taking in the sufficient amount of fresh air for ensuring favorable running performance of the vehicle.

In a case where the temperature T of the particulate filter 27 has been raised by the regeneration operation of the particulate filter 27 or other factors, abrupt full opening of the intake throttle valve 15 would adversely cause fresh air to abruptly flow in a large amount, and thus abruptly increase oxygen supply, resulting in unduly rise in the temperature T of the particulate filter 27. This may possibly lead to the melt, defect, and/or hypofunction of the particulate filter 27. To cope with this, the control unit 50 of the engine 1 according to the embodiment, if a specified (predetermined or predeterminable) condition has been fulfilled, inhibits the full opening of the intake throttle valve 15 in case that a malfunction is detected in the throttle valve opening sensor 16.

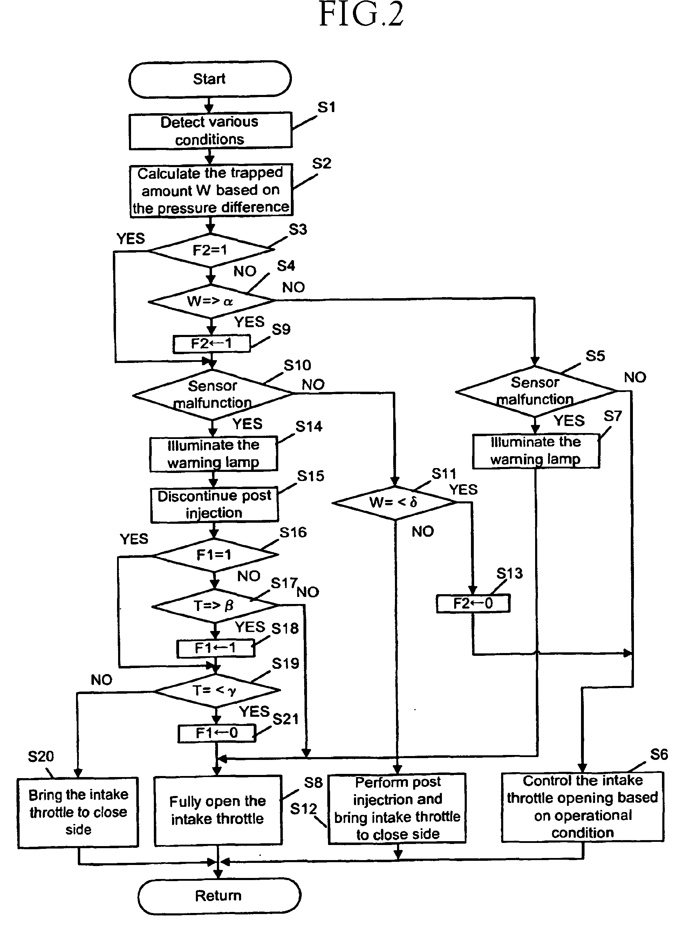

The control of the opening degree of the intake throttle valve 15 will now be described in detail with reference to the flow chart shown in FIG. 2. As apparent from the above description, the control unit 50 preferably is loaded with a computer program for carrying out the following control flow. The program is preferably stored in a memory (not shown) coupled to the control unit 50.

First, in step S1, the control unit 50 obtains a variety of values detected by the above-described sensors such as the temperature T of the particulate filter 27 (detected by the second exhaust-gas temperature sensor 25), the exhaust-gas pressure upstream of the particulate filter 27 (detected by the upstream pressure sensor 26), the exhaust-gas pressure downstream of the particulate filter 27 (detected by the downstream pressure sensor 28), and the engine rotational speed. In addition, the control unit 50 calculates the pressure difference between the detected upstream exhaust-gas pressure and the detected downstream exhaust-gas pressure. Then, in step S2, the trapped amount W of particulate trapped in the particulate filter 27 is calculated or determined or estimated based on the calculated pressure difference.

Next, in step S3, a judgement or determination is made as to whether or not the flag F2 is 1. If NO is judged meaning that the flag F2 is not 1, a judgement or determination is made as to whether or not the trapped amount W is equal to or larger than a specified (predetermined or predeterminable) value α in step S4 (as preferred regeneration initiation judgement means). The initial value of the flag F2 is 0. When the trapped amount W reaches a predetermined or predeterminable value α or larger, the flag F2 is set to 1 in step S9. When the trapped amount W is decreased to a specified (predetermined or predeterminable) value δ or smaller by the regeneration operation, the flag F2 is reset to 0 in step S13.

If step S4 judges NO meaning that the trapped amount W is not equal to the predetermined or predeterminable value α or larger, the sequence proceeds to step S5 where a judgement or determination or discrimination is made as to whether the presence or absence of a malfunction of the throttle valve opening sensor 16 provided for detecting the opening degree of the intake throttle valve 15 (as preferred malfunction detecting means). Herein, the malfunction of the throttle valve opening sensor 16 refers to the condition where its output value is out of a predetermined or predeterminable range (normal range) e.g. due to the brake or short in sensor wiring. In step S5, if the output value is in the predetermined or predeterminable range, the absence of a malfunction (NO) is judged. On the other hand, if the output value is out of the predetermined or predeterminable range, the presence of a malfunction (YES) is judged.

If step S5 judges NO meaning that no sensor malfunction has occurred, a control of the opening degree of the intake throttle valve 15 is performed in accordance with the operational condition in step S6. If step S5 judges YES meaning that sensor malfunction has occurred, a warning lamp (not shown) is illuminated in step S7. and the intake throttle valve 15 is fully opened in step S8 (as preferred malfunction handling means).

On the other hand, if step S4 judges YES meaning that the trapped amount W is equal to the predetermined or predeterminable value α or larger, the sequence proceeds to step S9, where the flag F2 is set to 1.

Next, in step S10. a judgement or determination is made as to whether the presence or absence of a malfunction of the throttle valve opening sensor 16 in the similar manner to step S5 described above (as preferred malfunction detection means). If NO is judged meaning that no sensor malfunction has occurred, the sequence proceeds to step S11 where a judgement or determination is made as to whether or not the trapped amount W is equal to the predetermined or predeterminable value δ or smaller, that is, whether or not the regeneration control of the particulate filter 27 has reduced the trapped amount W to the predetermined or predeterminable value δ or smaller. The predetermined or predeterminable value δ is preferably preset to smaller than the predetermined or predeterminable value a used in the above-described regeneration initiation.

If step S11 judges NO meaning that the trapped amount W is not equal to the predetermined or predeterminable value δ or smaller, the filter regeneration is implemented by performing the post injection and changing the opening degree of the intake throttle valve 15 to the closing side in step S12 (as preferred regeneration means). If step S11 judges YES meaning that the trapped amount W is equal to the predetermined or predeterminable value δ or smaller, the flag F2 is set to 0 in step S13; the control of the opening degree of the intake throttle valve 15 is performed in accordance with the operational condition in step S6; and the sequence returns to step S1. In other words, the sequence completes the regeneration of the particulate filter 27 and shifts to a control for the non-regeneration state.

On the other hand, if step S10 judges YES meaning that sensor malfunction has occurred, the warning lamp is illuminated in step S14 and the post injection is discontinued or reduced in its amount in step S15. The discontinuation or reduction of the post injection aims at suspending the regeneration of the particulate filter 27, thereby decreasing the temperature T of the particulate filter 27 quickly and positively.

Next, in step S16, a judgement or determination is made as to whether or not a flag F1 is 1. The initial value of the flag F1 is 0. When the temperature T of the particulate filter 27 reaches a specified (predetermined or predeterminable) value β or larger, the flag F1 is set to 1 in step S18. When the temperature T is decreased to a specified (predetermined or predeterminable) value γ or smaller by the regeneration operation, the flag F1 is reset to 0 in step S21.

If step S16 judges NO meaning that the flag has not been set to 1, a judgement or determination is made as to whether or not the temperature T of the particulate filter 27 is equal to the predetermined or predeterminable value β or larger in step S17 (third parameter value detection means). The predetermined or predeterminable value β may be preferably set to approximately 500°C which is reached in the late stage of a standard regeneration control, for example. If the judgement is NO meaning that the temperature T is not equal to β or larger, the intake throttle valve 15 is fully opened, and the sequence returns to step S1.

On the other hand, if step S17 judges YES meaning that the temperature T is equal to β or larger, the flag F1 is set to 1 in step S18 and a judgement is made as to whether or not the temperature T of the particulate filter 27 is equal to the predetermined or predeterminable value γ or smaller in step S19 (regeneration suppression judgement means). The predetermined or predeterminable value γ is smaller than β. For example, γ may be preferably set to approximately 400°C being lower than β.

If step S19 judges NO meaning that the temperature T is not equal to γ or smaller, the condition of the intake throttle valve 15 being adjusted to the closing side is maintained in step S20 (as preferred malfunction handling inhibition means) and the sequence returns to step S1. If step S19 judges YES meaning that the temperature T is equal to γ or smaller, the flag F1 is reset to 0 in step S21; the intake throttle valve 15 is fully opened in step S8; and the sequence returns to step S1.

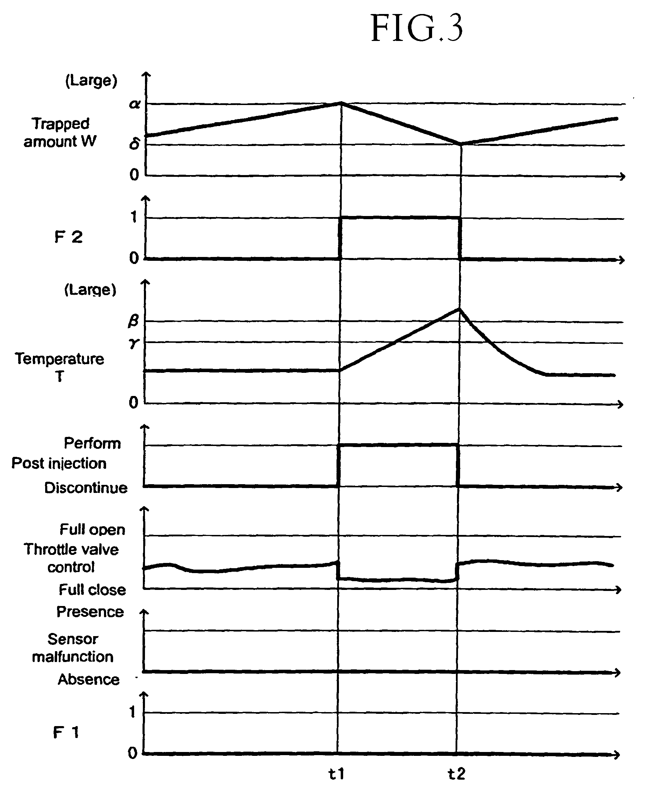

This control acts as will be described with reference to the time charts shown in FIG. 3 through FIG. 5.

FIG. 3 shows the case without the occurrence of a malfunction of the throttle valve opening sensor 16 (steps S10, S11, S12, S13, and S16 in FIG. 2). As shown, in a condition where the trapped amount W is on gradual increase but has not yet reached the predetermined or predeterminable value α, the opening degree of the intake throttle valve 15 is controlled in accordance with engine load. When the trapped amount W reaches the predetermined or predeterminable value α (at time t1) as the particulate exhausted by the operation of the engine 1 is trapped and accumulated in the particulate filter 27, the flag F2 is set to 1; the opening degree of the intake throttle valve 15 is reduced to a smaller degree than that in non-regeneration state; and the post injection is performed, that is, the regeneration control of the particulate filter 27 is implemented.

Then, the regeneration control causes the exhausted particulate to burn out, so that the trapped amount W gradually decreases and the temperature T of the particulate filter 27 gradually rises. When the trapped amount W has been decreased to the predetermined or predeterminable value α (at time t2), the flag F2 is reset to 0 and thus the regeneration control, or the post injection and the control of the opening of intake throttle valve to closing side, is ended, and the control shifts to the operational-condition-based control of the intake throttle valve 15. In addition, this results in the gradual drop in the temperature T of the particulate filter 27.

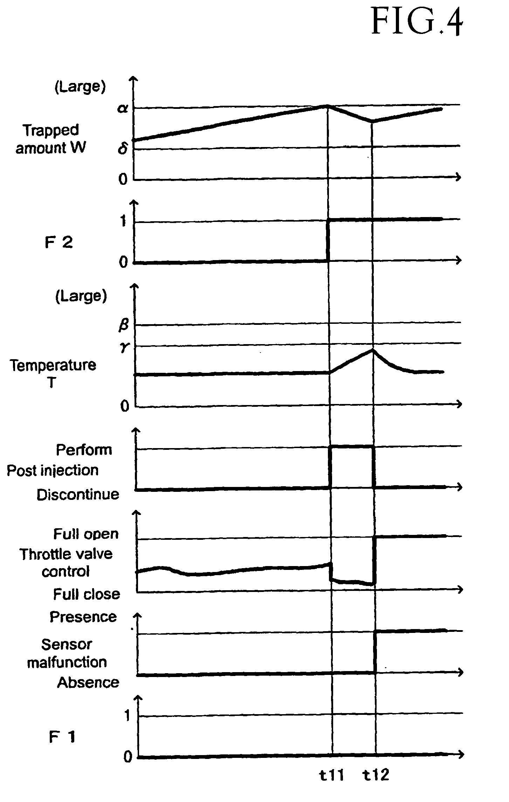

FIG. 4 shows the case where a malfunction occurs in the throttle valve opening sensor 16 and the temperature T of the particulate filter 27 at the timing of the malfunction occurrence is equal to value β or smaller (steps S10, S17, and S8). For the control before the time t11 at which the regeneration control is initiated, its description is omitted because it is similar or the same as that before the time t1 shown in FIG. 3.

As shown, by the regeneration control having been implemented from the time t11, the exhausted particulate bums out to gradually decrease the trapped amount W and to gradually raise the temperature T of the particulate filter 27. Upon the occurrence of the malfunction of the throttle valve opening sensor 16 (at time t12), the post injection is immediately discontinued, or reduced in its amount, and the judgement or determination is made as to whether or not the temperature T of the particulate filter 27 is equal to the predetermined or predeterminable value β or larger. At this time, the intake throttle valve 15 is controlled to full open because the temperature T is not equal to the predetermined or predeterminable value β or larger. As a result, the temperature T of the particulate filter 27 quickly drops with favorable running performance of the vehicle being ensured. The reason for the immediate full open of the intake throttle valve 15 is that the problem of unduly temperature rise is not caused even by the full open of the intake throttle valve 15 because the exhaust particulate trapped in the particulate filter 27 has not yet actively burned out in the early stage of the regeneration (where the temperature T is not equal to the predetermined or predeterminable value β or larger).

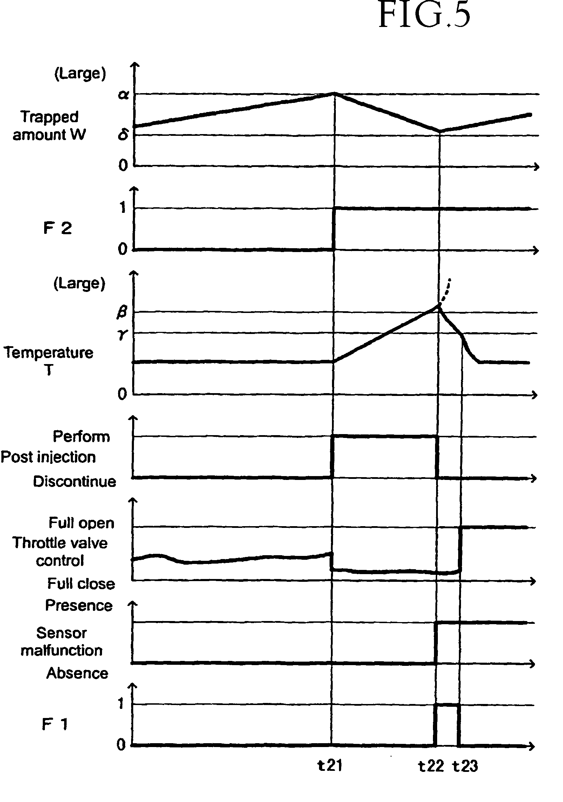

FIG. 5 shows the case where a malfunction occurs in the throttle valve opening sensor 16 and the temperature T of the particulate filter 27 at the timing of the malfunction occurrence is equal to value β or larger (steps S10, S17, S19, S20, and S8). For the control before the time t2l at which the regeneration control is initiated, its description is omitted because it is similar or the same as that before the time 11 shown in FIG. 3.

As shown, by the regeneration control having been implemented from the time t21, the exhausted particulate bums out to gradually decrease the trapped amount W and to gradually raise the temperature T of the particulate filter 27. Upon the occurrence of the malfunction of the throttle valve opening sensor 16 (at time t22), the post injection is immediately discontinued, or reduced in its amount, and the judgement or determination is made as to whether or not the temperature T of the particulate filter 27 is equal to the predetermined or predeterminable value β or larger. In this case, however, the full open control of the intake throttle valve 15 (indicated by the broken line in FIG. 5) is suspended and thus its opening degree is maintained on the closing side because the temperature T is equal to the predetermined or predeterminable value β or larger, that is, the regeneration of the particulate filter 27 is in the late stage. Then, the judgement or determination is made as to whether or not the temperature T of the particulate filter 27 has dropped to the predetermined or predeterminable value γ or smaller. When the temperature T is judged to be equal to the predetermined or predeterminable value γ or smaller (at time t23), that is, the temperature T of the particulate filter 27 has been sufficiently dropped, the intake throttle valve 15 is fully opened. This control prevents the unduly rise in the temperature T of the particulate filter 27 (indicated by the broken line in FIG. 5) due to the abrupt increase in the oxygen supply to the particulate filter 27 and the accompanying problem such as melt because the full open control of the intake throttle valve 15 is inhibited in the later stage of the regeneration (the period from time t22 to t23) with the temperature T of the particulate filter 27 being high.

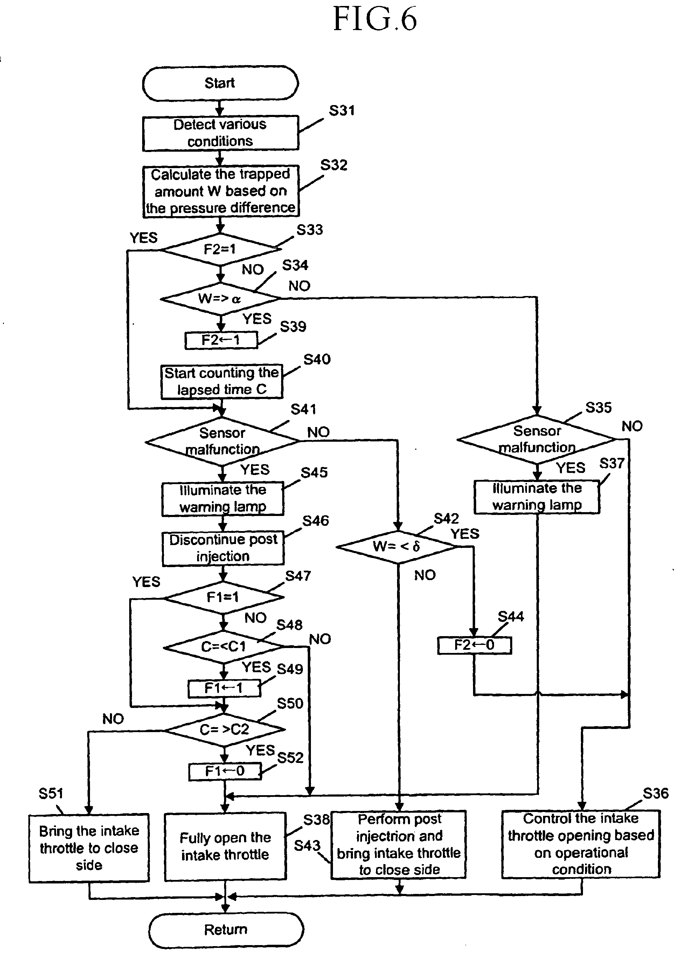

In the flow chart shown in FIG. 2, in case that a malfunction is detected or judged in the throttle valve opening sensor 16 during the regeneration of the particulate filter 27, the timing of the full open control of the intake throttle valve 15 is determined in accordance with the temperature T of the particulate filter 27. However, the timing may be otherwise determined in accordance with the lapsed time since the initiation of the regeneration of the particulate filter 27. Such a control will now be described with reference to the flow chart shown in FIG. 6. Step 31 through step 39 are similar or the same as step S1 through step S9, respectively, with its description omitted. For other steps, the description is omitted for the same steps as those in FIG. 2.

If step S34 judges YES meaning that the trapped amount W is equal to the specified (predetermined or predeterminable) value α or larger, the sequence proceeds to step S39 where the flag F2 is set to 1, and in step S40, a counter (third parameter value detection means, not shown) is operated to measure a lapsed time C since the regeneration initiation.

Next, in step S41, a judgement or determination is made as to whether the presence or absence of the malfunction of the throttle valve opening sensor 16. If NO is judged meaning that no sensor malfunction has occurred, the sequence proceeds to step S42 where a judgement or determination is made as to whether the trapped amount is equal to the specified (predetermined or predeterminable) value δ or smaller.

If step S42 judges NO meaning that the trapped amount W is not equal to the specified (predetermined or predeterminable) value δ or smaller, the filter regeneration is implemented by performing the post injection and changing the opening degree of the intake throttle valve 15 to the closing side in step S43 (as preferred regeneration means). If step S 42 judges YES meaning that the trapped amount W is equal to the predeterminable value δ or smaller, the flag F2 is set to 0 in step S44; the control of the opening degree of the intake throttle valve 15 is performed in accordance with the operational condition in step S36; and the sequence returns to step S31. In other words, the sequence completes the regeneration of the particulate filter 27 and shifts to a control for the non-regeneration state.

On the other hand, if step S41 judges YES meaning that sensor malfunction has occurred, the warning lamp is illuminated in step S45 and the post injection is discontinued or reduced in its amount in step S46.

Next, in step S47, a judgement or determination is made as to whether or not the flag F1 has been set to 1. If NO is judged meaning that the flag F1 is not 1, a judgement or determination is made as to whether or not the lapsed time C is equal to a specified (predetermined or predeterminable) value C1 or smaller in step S48 (a third parameter value detection means). The predetermined or predeterminable value C1 may be preferably set to a time period during which the temperature T of the particulate filter 27 is raised to approximately 500°C by a standard regeneration control, for example. If YES is judged meaning that the lapsed time C is equal to the predetermined or predeterminable value C1 or smaller, the intake throttle valve 15 is fully opened in step S38, and the sequence returns to step S31.

On the other hand, if step S48 judges NO meaning that the lapsed time C is not equal to the predetermined or predeterminable value C1 or smaller, the flag F1 is set to 1 in step S49 and a judgement or determination is made as to whether or not the lapsed time C is equal to the predetermined or predeterminable value C2 or larger in step S50 (regeneration suppression judgement means). The specified (predetermined or predeterminable) value C2 is greater than C1. For example, C2 may be preferably set to a time period during which the discontinuation of the regeneration causes the temperature T of the particulate filter 27 to drop to approximately 400°C when the temperature T of the particulate filter 27 has raised to approximately 500°C in a standard operational condition.

If step S50 judges NO meaning that the lapsed time C is not equal to C2 or larger, the condition of the intake throttle valve 15 being adjusted to the closing side is maintained in step S51 and the sequence returns to step S31. If step S50 judges YES meaning that the lapsed time C is equal to C2 or larger, the flag F1 is reset to 0 in step S52; the intake throttle valve 15 is fully opened in step S52; and the sequence returns to step S31.

It should be appreciated that though the above-described embodiment changes the opening of the intake throttle valve 15 during the regeneration operation to a smaller degree (no fixed value) than that in the non-regenerating state in accordance with the engine operational condition, the opening may be changed to a degree equal to or smaller than a specified (predetermined predeterminable) degree (substantially fully closed) regardless of the engine operational condition.

It should be also appreciated that the preferred embodiment of the present invention is described for a diesel engine, but the present invention may apply to gasoline engines or any other engines that may produce carbon particulate. Also, the application of the present invention is not limited to automotive engines, but includes engines in industrial use or engines used for other purposes.

Moreover, though this embodiment runs the computer program for performing the control of the present invention which has been stored in the memory of the control unit 50, the program may be stored in a storage medium (e.g. CD-ROM) separate from the control unit 50 or may be implemented in a dedicated circuitry, logic component and/or programmable device (e.g. an PROM, EPROM, EEPROM, ASIC, etc.).

Furthermore, it should be appreciated that even though the invention is described with reference to an engine using a throttle valve for controlling the amount of intake-air, the invention is equally applicable to engines where the amount of intake air is controlled in a different way.

As described above, the present invention inhibits the opening degree of the intake throttle valve from being widened when the regeneration of the particulate filter or other factors have raised the filter temperature. Accordingly, even when it is demanded that the opening degree of the intake throttle valve be widened to cope with a malfunction of the throttle valve sensor, defects in the filter, possibly caused by the unduly temperature rise of the particulate filter, is prevented.

## Claims

1. A control apparatus for an engine (1), the engine (1) being equipped with trapping means (27) for trapping exhausted particulate in an exhaust passage (20) of the engine (1), comprising,
first parameter value detection means (16) for detecting a parameter value associated with amount of intake-air;
second parameter value detection means (26, 28) for detecting at least one parameter value associated with the amount of exhausted particulate trapped in the trapping means (27);
regeneration means (50) for regenerating the trapping means (27) by including reducing the amount of intake-air to a smaller degree than that attained in accordance with the engine operational condition during non-regeneration state;
malfunction detection means (50) for detecting a malfunction of said first parameter value detection means (16);
**characterized by further comprising:**
regeneration initiation judgement means (50) for making an initiation judgement that a burn-out operation of the exhausted particulate trapped in the trapping means (27) should be initiated in accordance with a detection of said second parameter value detection means (26, 28), wherein said regeneration means (50) being configured for regenerating the trapping means (27), when the initiation judgement is made by said regeneration initiation judgement means (50),
malfunction handling means (50) for handling the malfunction by increasing the amount of intake-air in case said malfunction detection means (50) detects the malfunction of said first parameter value detection means (16); and
malfunction handling inhibition means (50) for inhibiting an operation of said malfunction handling means (50) during a regeneration operation of said regeneration means (50) even in case said malfunction detection means (50) detects a malfunction of said first parameter value detection means (16).

2. The control apparatus for an engine (1) as defined in claim 1 further comprising, third parameter value detection means (25, 50) for detecting a parameter value (T; C) associated with the progress of the regeneration by the regeneration means (50),
wherein said malfunction handling inhibition means (50) inhibits the operation of said malfunction handling means (50) only when the progress in the regeneration detected by said third parameter value detection means (25, 50) is greater than a predetermined or predeterminable degree.

3. The control apparatus for an engine (1) as defined in claim 2,
wherein said regeneration means (5), when the initiation judgement is made by said regeneration initiation judgement means (50), further controls a fuel injector (4) of the engine (1) to perform a post injection during the expansion stroke after a primary injection near the top dead center of the compression stroke, and
wherein said regeneration means (50) reduces the amount of the post injection when said malfunction handling inhibition means (50) inhibits the operation of said malfunction handling means (50).

4. The control apparatus for an engine (1) as defined in claim 2 or 3 further comprising,
regeneration suppression judgement means (50) for judging that the reduction in the amount of the post injection has suppressed the progress in the regeneration of the trapping means (27) based on the detection by said third parameter value detection means (25, 50),
wherein said malfunction handling inhibition means (50) discontinues the inhibition of the operation of said malfunction handling means (50) when said regeneration suppression judgement means (50) judges that the progress in the regeneration is suppressed.

5. The control apparatus for an engine (1) as defined in any one of claims 2 to 4,
wherein said third parameter value detection means (25, 50) detects any one of a parameter value (T; C) associated with the temperature (T) of the trapping means (27) and the lapsed time (C) since said regeneration means (50) initiated its operation.

6. An engine (1) equipped with the control apparatus as defined in any one of claims 1 to 5.

7. A diesel engine (1) equipped with the control apparatus as defined in any one of claims 1 to 5.

8. A control method of an engine (1), the engine being equipped with trapping means (27) for trapping exhausted particulate in an exhaust passage (20) of the engine (1), comprising the following steps of:
detecting a first parameter value associated with the amount of intake-air;
detecting at least one second parameter value associated with the amount of exhausted particulate trapped in the trapping means (27);
regenerating the trapping means (27) by reducing the amount of intake-air to a smaller degree than that attained in accordance with the engine operational condition during non-regeneration state;
detecting a malfunction in said step of detecting the first parameter value;
**characterized by the steps of:**
making an initiation judgement that a burn-out operation of the exhausted particulate trapped in the trapping means (27) should be initiated based on a detection of the second parameter value, wherein the trapping means (27) is regenerated upon the initiation judgement;
handling a malfunction by increasing the amount of intake-air in case the malfunction is detected in said step of detecting the first parameter value; and
inhibiting the handling of the malfunction during the regeneration of the trapping means even in case the malfunction is detected in said step of detecting the first parameter value.

9. Computer program product which, when loaded onto a computer for use in a control apparatus for an engine (1) being equipped with trapping means (27) for trapping exhausted particulate in an exhaust passage (20) of the engine (1), carries out the control method of an engine according to claim 8.

## Patentansprüche

1. Steuer- bzw. Regelvorrichtung für einen Motor (1), wobei der Motor (1) mit Einfang- bzw. Einschlußmittel (27) zum Einfangen von ausgebrachtem bzw. ausgesto-βenem teilchenförmigem Material in einen Auslaßdurchtritt (20) des Motors (1) ausgerüstet ist, umfassend:
erste Parameterwert-Detektionsmittel (16) zum Detektieren eines Parameterwerts, welcher mit einer Menge an Einlaßluft assoziiert ist;
zweite Parameterwert-Detektionsmittel (26, 28) zum Detektieren wenigstens eines Parameterwerts, welcher mit der Menge an ausgebrachtem teilchenförmigem Material assoziiert ist, welches in den Einfangmitteln (27) eingefangen ist;
Regenerationsmittel (50) zum Regenerieren der Einfangmittel (27) durch ein Beinhalten eines Reduzierens der Menge an Einlaßluft auf ein geringeres Ausmaß als dasjenige, welches in Übereinstimmung mit der Motorbetriebsbedingung während eines Nicht-Regenerationszustands erzielt ist;
Fehlfunktions-Detektionsmittel (50) zum Detektieren einer Fehlfunktion der ersten Parameterwert-Detektionsmittel (16);
**dadurch gekennzeichnet, daß** sie weiters umfaßt:
Regenerationsbeginn-Beurteilungsmittel (50) zur Durchführung einer Beurteilung eines Beginns, daß ein Ausbrennvorgang des ausgestoßenen teilchenförmigen Materials, welches in den Einfangmitteln (27) gefangen ist, in Übereinstimmung mit einer Detektion der zweiten Parameterwert-Detektionsmittel (26, 28) begonnen werden sollte, wobei die Regenerationsmittel (50) für ein Regenerieren der Einfangmittel (27) konfiguriert sind, wenn die Beginnbeurteilung durch die Regenerationsbeginn-Beurteilungsmittel (50) durchgeführt ist,
Fehlfunktions-Handhabungsmittel (50) zum Handhaben der Fehlfunktion durch ein Erhöhen der Menge an Einlaßluft in dem Fall, daß die Fehlfunktions-Detektionsmittel (50) die Fehlfunktion der ersten Parameterwert-Detektionsmittel (16) detektieren; und
Fehlfunktionshandhabungs-Hemmittel (50) zum Hemmen bzw. Verhindern eines Betriebs der Fehlfunktions-Handhabungsmittel (50) während eines Regenerationsvorgangs der Regenerationsmittel (50) selbst in einem Fall, daß die Fehlfunktions-Detektionsmittel (50) eine Fehlfunktion der ersten Parameterwert-Detektionsmittel (16) detektieren.

2. Steuervorrichtung für einen Motor (1) nach Anspruch 1, weiters umfassend:
dritte Parameterwert-Detektionsmittel (25, 50) zum Detektieren eines Parameterwerts (T; C), welcher mit dem Fortschritt der Regeneration durch die Regenerationsmittel (50) assoziiert ist,
wobei die Fehlfunktionshandhabungs-Hemmittel (50) den Betrieb der Fehlfunktions-Handhabungsmittel (50) nur dann hemmen bzw. verhindern, wenn der Fortschritt in der Regeneration, welcher durch die dritten Parameterwert-Detektionsmittel (25, 50) detektiert ist, größer als ein vorbestimmtes oder vorbestimmbares Ausmaß ist.

3. Steuervorrichtung für einen Motor (1) nach Anspruch 2,
wobei die Regenerationsmittel (5), wenn die Beginnbeurteilung durch die Regenerationsbeginn-Beurteilungsmittel (50) durchgeführt ist, weiters eine Kraftstoffeinspritzeinrichtung (4) des Motors (1) regeln bzw. steuern, um eine Nacheinspritzung während des Expansionshubs nach einer primären bzw. Haupteinspritzung nahe dem oberen Totpunkt des Kompressionshubs durchzuführen, und
wobei die Regenerationsmittel (50) die Menge der Nacheinspritzung reduzieren, wenn die Fehlfunktionshandhabungs-Hemmittel (50) den Betrieb der Fehlfunktions-Handhabungsmittel (50) hemmen.

4. Steuervorrichtung für einen Motor (1) nach Anspruch 2 oder 3, weiters umfassend Regenerationsunterdrückungs-Beurteilungsmittel (50) zum Beurteilen, daß die Reduktion in der Menge der Nacheinspritzung den Fortschritt in der Regeneration der Einfangmittel (27) unterdrückt hat, basierend auf der Detektion durch die dritten Parameterwert-Detektionsmittel (25, 50),
wobei die Fehlfunktionshandhabungs-Hemmittel (50) die Hemmung des Betriebs der Fehlfunktions-Handhabungsmittel (50) beenden, wenn die Regenerationsunterdrükkungs-Beurteilungsmittel (50) beurteilen bzw. feststellen, daß der Fortschritt in der Regeneration unterdrückt ist.

5. Steuervorrichtung für einen Motor (1) nach einem der Ansprüche 2 bis 4,
wobei die dritten Parameterwert-Detektionsmittel (25, 50) irgendeinen eines Parameterwerts (T; C) detektieren, welcher mit der Temperatur (T) der Einfangmittel (27) und der verstrichenen Zeit (C) assoziiert ist, seitdem die Regenerationsmittel (50) ihren Betrieb begonnen haben.

6. Motor (1), welcher mit der Regel- bzw. Steuervorrichtung ausgerüstet ist, wie sie in einem der Ansprüche 1 bis 5 definiert ist.

7. Dieselmotor (1), welcher mit der Reget- bzw. Steuervorrichtung ausgerüstet ist, wie sie in einem der Ansprüche 1 bis 5 definiert ist.

8. Regel- bzw. Steuerverfahren eines Motors (1), wobei der Motor mit Einschluß- bzw. Einfangmittel (27) zum Einfangen bzw. Einschließen von ausgebrachtem bzw. ausgestoßenem teilchenförmigem Material in einem Auslaßdurchtritt (20) des Motors (1) ausgerüstet ist, umfassend die folgenden Schritte:
Detektieren eines ersten Parameterwerts, welcher mit der Menge an Einlaßluft assoziiert ist;
Detektieren wenigstens eines zweiten Parameterwerts, welcher mit der Menge an ausgestoßenem bzw. ausgebrachtem teilchenförmigem Material assoziiert ist, welches in den Einfangmitteln (27) eingefangen ist bzw. wird;
Regenerieren der Einfangmittel (27) durch ein Reduzieren der Menge an Einlaßluft auf ein geringeres Ausmaß als dasjenige, welches in Übereinstimmung mit dem Motorbetriebszustand während eines Nicht-Regenerationszustands erhalten wird;
Detektieren einer Fehlfunktion in dem Schritt eines Detektierens des ersten Parameterwerts;
**gekennzeichnet durch** die Schritte:
Durchführen einer Beginnbeurteitung, daß ein Ausbrennvorgang des ausgebrachten teilchenförmigen Materials, welches in den Einfangmitteln (27) eingefangen ist, begonnen werden sollte, basierend auf einer Detektion des zweiten Parameterwerts,
wobei die Einfangmittel (27) bei bzw. nach der Beginnbeurteilung regeneriert werden;
Handhaben einer Fehlfunktion **durch** ein Erhöhen der Menge an Einlaßluft in einem Fall, daß die Fehlfunktion in dem Schritt eines Detektierens des ersten Parameterwerts detektiert wird; und
Hemmen bzw. Verhindern des Handhabens der Fehlfunktion während der Regeneration der Einfangmittel selbst in dem Fall, daß die Fehlfunktion in dem Schritt eines Detektierens des ersten Parameterwerts detektiert wird.

9. Computerprogrammprodukt, welches, wenn es auf einen Computer für eine Verwendung in einer Steuervorrichtung für einen Motor (1) geladen ist, welcher mit Einschluß- bzw. Einfangmitteln (27) zum Einfangen von ausgebrachtem teilchenförmigem Material in einem Auslaßdurchtritt (20) des Motors (1) ausgerüstet ist, das Regel- bzw. Steuerverfahren eines Motors gemäß Anspruch 8 durchführt.

## Revendications

1. Appareil de commande d'un moteur (1), le moteur (1) étant équipé d'un moyen de piégeage (27) qui piège les particules d'échappement dans un passage d'échappement (20) du moteur (1), l'appareil comprenant :
un premier moyen (16) de détection de valeurs de paramètre qui détecte la valeur d'un paramètre associé à la quantité d'air d'admission,
des deuxièmes moyens (26, 28) de détection de valeurs de paramètre qui détectent la valeur d'au moins un paramètre associé à la quantité de particules d'échappement piégées dans le moyen de piégeage (27),
un moyen de régénération (50) qui régénère le moyen de piégeage (27) notamment en réduisant la quantité d'air d'admission jusqu'à un niveau inférieur à celui atteint dans les conditions de fonctionnement du moteur à l'état de non-régénération,
un moyen de détection des dysfonctionnements (50) qui détecte le dysfonctionnement dudit premier moyen (16) de détection de valeurs de paramètre,
**caractérisé en ce qu'**il comprend en outre :
un moyen (50) de décision du lancement de la régénération qui décide que l'opération de combustion des particules d'échappement piégées dans le moyen de piégeage (27) doit être lancée en accord avec la détection effectuée par lesdits deuxièmes moyens (26, 28) de détection de valeurs de paramètre, ledit moyen de régénération (50) étant configuré pour régénérer le moyen de piégeage (27) lorsque la décision de lancement a été prise par ledit moyen (50) de décision de lancement de la régénération,
un moyen (50) de traitement des dysfonctionnements qui traite les dysfonctionnements en augmentant la quantité d'air d'admission au cas où ledit moyen (50) de détection des dysfonctionnements a détecté un dysfonctionnement dudit premier moyen (16) de détection de valeurs de paramètre et
un moyen (50) d'inhibition du traitement des dysfonctionnements qui inhibe le fonctionnement dudit moyen (50) de traitement des dysfonctionnements pendant l'opération de régénération par ledit moyen de régénération (50) même au cas où ledit moyen (50) de détection des dysfonctionnements a détecté un dysfonctionnement dudit premier moyen (16) de détection de valeurs de paramètre.

2. Appareil de commande d'un moteur (1) selon la revendication 1, qui comprend en outre :
des troisièmes moyens (25, 50) de détection de valeurs de paramètre pour détecter la valeur d'un paramètre (T; C) associé à la progression de la régénération par ledit moyen de régénération (50),
ledit moyen d'inhibition du traitement des dysfonctionnements (50) n'inhibant le fonctionnement dudit moyen (50) de traitement des dysfonctionnements que lorsque la progression de la régénération détectée par lesdits troisièmes moyens (25, 50) de détection de valeurs de paramètre est supérieure à un niveau prédéterminé ou prédéterminable.

3. Appareil de commande d'un moteur (1) selon la revendication 2, dans lequel, lorsque la décision de lancement a été prise par ledit moyen (50) de décision de lancement de la régénération, ledit moyen de régénération (50) commande en outre à l'injecteur de carburant (4) du moteur (1) d'effectuer une post-injection pendant la course de détente après une injection primaire proche du point mort haut de la course de compression, ledit moyen de régénération (50) réduisant la quantité de la post-injection lorsque ledit moyen (50) d'inhibition du traitement des dysfonctionnements inhibe le fonctionnement dudit moyen (50) de traitement des dysfonctionnements.

4. Appareil de commande d'un moteur (1) selon les revendications 2 ou 3, qui comprend en outre:
un moyen (50) de décision de suppression de la régénération qui, sur base de la détection effectuée par lesdits troisièmes moyens (25, 50) de détection de valeurs de paramètre, décide que la réduction de la quantité de post-injection a supprimé la progression de la régénération du moyen de piégeage (27),
ledit moyen (50) d'inhibition du traitement des dysfonctionnements interrompant l'inhibition du fonctionnement dudit moyen (50) de traitement des dysfonctionnements lorsque ledit moyen de décision de suppression de la régénération (50) juge que la progression de la régénération est supprimée.

5. Appareil de commande d'un moteur (1) selon l'une quelconque des revendications 2 à 4, dans lequel lesdits troisièmes moyens (25, 50) de détection de valeurs de paramètre détectent la valeur de l'un quelconque des paramètres (T; C) associés à la température (T) du moyen de piégeage (27) et à la durée (C) qui s'est écoulée depuis que ledit moyen de régénération (50) a commencé son opération.

6. Moteur (1) équipé de l'appareil de commande selon l'une quelconque des revendications 1 à 5.

7. Moteur diesel (1) équipé de l'appareil de commande selon l'une quelconque des revendications 1 à 5.

8. Procédé de commande d'un moteur (1), le moteur étant équipé d'un moyen de piégeage (27) qui piège les particules d'échappement dans un passage d'échappement (20) du moteur (1), lequel procédé comprend les étapes qui consistent à :
détecter la valeur d'un premier paramètre associé à la quantité d'air d'admission,
détecter la valeur d'au moins un deuxième paramètre associé à la quantité de particules d'échappement piégée dans le moyen de piégeage (27),
régénérer le moyen de piégeage (27) en réduisant la quantité d'air d'admission jusqu'à un niveau inférieur à celui atteint dans les conditions de fonctionnement du moteur à l'état de non-régénération,
détecter un dysfonctionnement dans ladite étape de détection de la valeur du premier paramètre,
**caractérisé par** les étapes qui consistent à :
prendre une décision de lancement qui lance une opération de combustion des particules d'échappement piégées dans le moyen de piégeage (27) sur base de la détection de la valeur du deuxième paramètre, le moyen de piégeage (27) étant régénéré à partir de la décision de lancement,
au cas où un dysfonctionnement est détecté dans ladite étape de détection de la première valeur de paramètre, traiter le dysfonctionnement en augmentant la quantité d'air d'admission et
inhiber le traitement du dysfonctionnement pendant la régénération du moyen de piégeage même au où un dysfonctionnement de ladite étape de détection de la valeur du premier paramètre a été détecté.

9. Produit de programme informatique qui met en oeuvre le procédé de commande d'un moteur selon la revendication 8 lorsqu'il est chargé sur un ordinateur destiné à être utilisé dans un appareil de commande d'un moteur (1) équipé d'un moyen de piégeage (27) qui piège les particules d'échappement dans un passage d'échappement (20) du moteur (1).
